Europäisches Patentamt

European Patent Office

Office européen des brevets

(19)

(11) EP 0 532 310 B1

(12) EUROPEAN PATENT SPECIFICATION

(45) Date of publication and mention
of the grant of the patent:
28.05.1997 Bulletin 1997/22

(51) Int Cl.6: H04N 5/92

(21) Application number: 92308206.9

(22) Date of filing: 10.09.1992

(54) **Digital video tape recording/reproducing apparatus**

Vorrichtung zum Aufzeichnen/Wiedergeben von digitalen Signalen

Dispositif d'enregistrement/de reproduction de signaux vidéo numériques

(84) Designated Contracting States:
DE FR GB NL

(30) Priority: 12.09.1991 JP 233332/91

(43) Date of publication of application:
17.03.1993 Bulletin 1993/11

(73) Proprietor: SONY CORPORATION
Tokyo (JP)

(72) Inventors:
• Okada, Hiroshi, c/o Patents Division
Shinagawa-ku, Tokyo 141 (JP)
• Kanota, Keiji, c/o Patents Division
Shinagawa-ku, Tokyo 141 (JP)
• Kubota, Yukio, c/o Patents Division
Shinagawa-ku, Tokyo 141 (JP)

(74) Representative: Pilch, Adam John Michael et al
D. YOUNG & CO.,
21 New Fetter Lane
London EC4A 1DA (GB)

(56) References cited:
EP-A- 0 080 897          EP-A- 0 183 411
GB-A- 2 195 810          US-A- 4 761 693

• PATENT ABSTRACTS OF JAPAN vol. 014, no.
301 (P-1069)28 June 1990 & JP-A-20 94 175
• PATENT ABSTRACTS OF JAPAN vol. 013, no.
524 (P-964)22 November 1989 & JP-A-12 13 867
• PATENT ABSTRACTS OF JAPAN vol. 013, no.
337 (P-906)28 July 1989 & JP-A-10 96 867

## Description

This invention relates to digital video tape recording/reproducing apparatus.

In digital video tape recorders (VTRs) developed for consumer use, it is known to record video and audio signals in digital form in different areas of the same recording track. For example, when recording the sound and movement of a human subject, a video frame is recorded in a number of tracks and the sound uttered by the human subject during that video frame period (referred to generally as the audio signal that is associated with the video signal) is recorded in those same tracks, but at different locations within the tracks. In one previously proposed digital VTR, when recording in the National Television Standards Committee (NTSC) standard, each frame of a digitized video signal, and the digitized audio signals associated therewith, are recorded in ten recording tracks. When the digitized audio signals represent sounds uttered by a human subject, the recording of digitized video and audio signals in common tracks results in a video picture having proper lip synchronization (i.e. correct synchronization between the subject's lips and the sounds emitted therefrom).

The recording of video and audio signals in separate portions of common tracks facilitates dubbing, voice overlay and other so-called special effect techniques. In this way, the digital audio signals may be recorded at a later time, and yet still be associated with the previously recorded digital video signals. Conversely, video signals may be dubbed by editing digital video information onto a recording medium which contains previously recorded audio information. The subsequent recording of digital audio signals that are intended to be associated with previously recorded digital video signals and the subsequent recording of digital video signals that are intended to be associated with previously recorded digital audio signals are referred to as after-recording operations; this term is a general description of re-recording audio or video signals after the basic recording of video and audio information has been completed.

In a typical after-recording operation, the after-recorded digital audio (or video) signals are recorded in different tracks to those of the previously recorded digital video (or audio) signals to be associated therewith. These different tracks are typically located downstream (or delayed) from the originally recorded signals. When the video and audio signals are reproduced, a time difference is introduced between the reproduced digital video and audio signals, which is manifested as a loss of synchronism therebetween. This is particularly noticeable and undesirable when the after-recorded signals are, for example, dubbed digital audio signals. In that event, when the digital video and audio signals are displayed together as a video picture, there is a loss of synchronism between the movement of the subject's lips and the sound emitted therefrom. In other words, the operation of a digital VTR in its after-recording mode is generally associated with a loss of lip synchronisation ("lip sync").

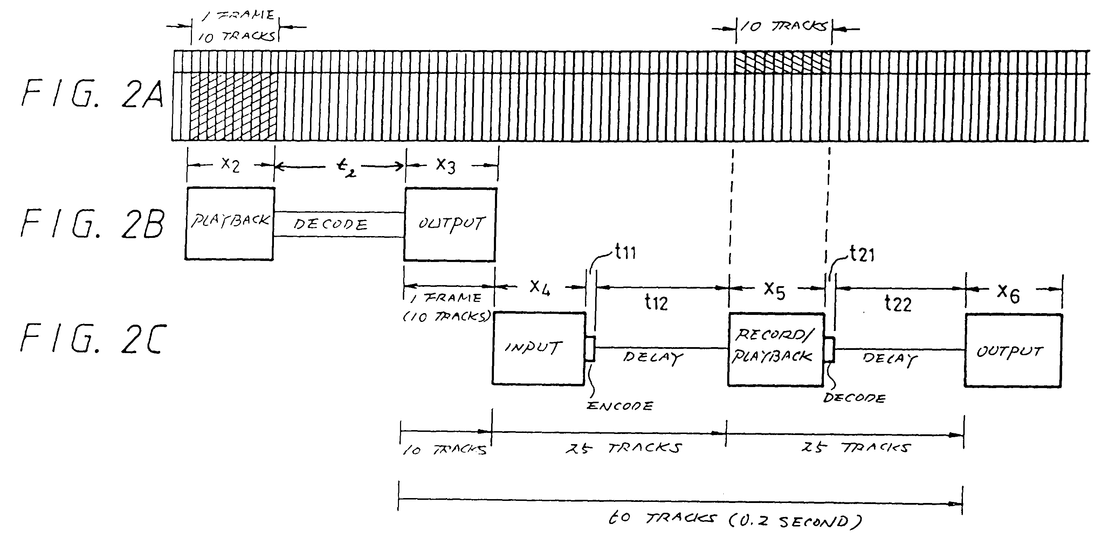

The foregoing problems will now be demonstrated with reference to Figures 1A to 1C and 2A to 2C of the accompanying drawings. Figure 1A is a schematic representation of recording tracks on a digital video tape in which digital video and digital audio signals are recorded. For the purposes of the present discussion, the basic information unit illustrated in Figure 1A is a video frame interval; and the digital video signals included in this interval are recorded in ten tracks when using the NTSC format, and in twelve tracks when using the phase alternating line (PAL) format. The digital video signals are recorded in a major portion of each of these ten tracks; and the digital audio signal associated with that digital video signal, such as the audio signal that may be picked up simultaneously with the imaging of the video signal, is also recorded in the same ten tracks but, as shown in Figure 1A, in a smaller upper portion of each track. Thus, a unit of digital video signals is recorded in a ten-track segment, and an associated unit of digital audio signals is also recorded in that tentrack segment.

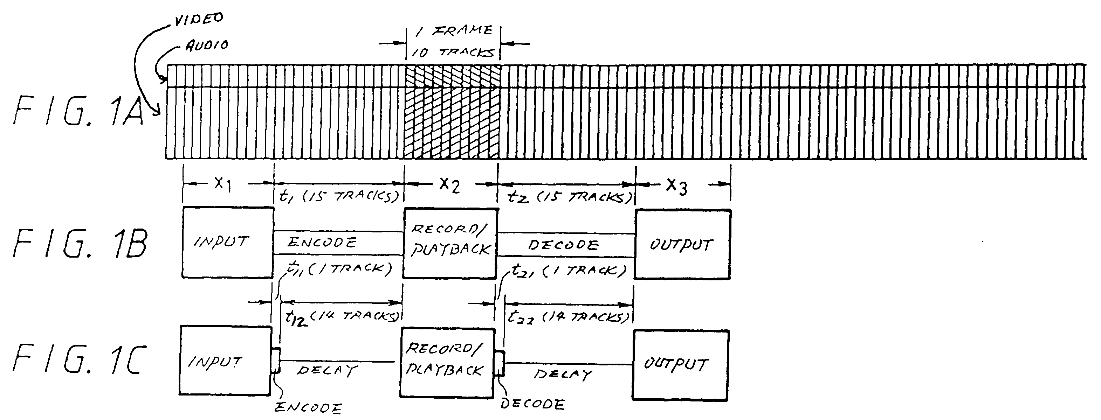

Figure 1B illustrates the timing relationship between the encoding, recording, reproducing and decoding of a digital video signal relative to the movement of the tape shown in Figure 1A. A frame of digital video signals is supplied for recording during a period $x_1$ and is encoded (e.g. by so-called "shuffling") for recording in a ten-track segment of the video tape during a later time interval $x_2$. The encoding of the digital video signal is effected by digital processing circuitry in a matter known to those of ordinary skill in the art, and this processing circuitry exhibits an inherent time delay $t_1$. The time delay $t_1$ is equivalent to the movement of 15 tracks of the video tape. Hence, this time delay $t_1$ is referred to as a 15 track delay. From Figures 1A and 1B, it is seen that a given point in a frame interval of a digital video signal is recorded in a track that is delayed by 25 tracks from the time that such point in the video signal is first supplied.

When the digital video signal is reproduced at a later time, it is played back during a time interval $x_2$ and then decoded (or "deshuffled") by digital processing circuitry normally used for this purpose. This decoding operation exhibits an inherent time delay $t_2$ which, typically, may be approximately equal to the inherent time delay $t_1$ exhibited by the encoder. Thereafter, the decoded digital video signal is recovered as an output video signal during a time interval $x_3$. It is seen from Figure 1B that a time delay of the order of 25 tracks is present between the reproduction and the recovery of a given time point of a frame interval.

Figure 1C illustrates the timing relationship in recording and reproducing an associated digital audio signal. A unit of audio signals (assumed to correspond to a frame interval) is supplied for recording during the interval $x_1$; and this audio signal is encoded (e.g. to provide for subsequent error correction) by digital audio processing circuitry of a type known to those of ordinary skill in the art. The digital audio processing circuitry exhibits an inherent time delay $t_{11}$, where $t_{11} < t_1$. In the present example, this inherent delay $t_{11}$ is equal to a one track delay.

In order that the digital audio signal may be recorded in the same tracks (but at separate portions) as the digital video signal associated therewith, the encoded audio signal is delayed by an amount $t_{12}$ (ideally, $t_{12} = t_1 - t_{11}$) thereby bringing the digital audio signal into time synchronism with the encoded digital video signal. The digital audio signal is then recorded during the time interval $x_2$ in the same tracks as the digital video signal. Hence, the associated digital and audio signals are supplied to the recording heads in synchronism.

During a playback operation, the unit of digital audio signals is reproduced during the time interval $x_2$, as shown in Figure 1C, and is then decoded (or error-corrected). This decoding operation exhibits an inherent time delay $t_{21}$, where $t_{21} < t_2$; and to ensure that the recovered digital audio signals are in synchronism with the associated digital video signals, the decoded audio signals are delayed by a time delay $t_{22}$ (ideally, $t_{22} = t_2 - t_{21}$). Thus, by delaying the reproduced, decoded digital audio signals, a given time point in the unit of recovered audio signals is in proper synchronism with a corresponding time point in the recovered video signals. Consequently, during normal recording and reproduction, the video and audio signals are in proper synchronism and correct "lip sync" is present in the recovered video picture (i.e. there is essentially no time difference between the reproduced digital and audio signals).

Figures 2A to 2C illustrate how proper synchronism between previously recorded video signals and after-recorded audio signals is lost because of a substantial time difference that is present when the digital video and after-recorded digital audio signals are reproduced. Figure 2A is a schematic representation of recording tracks in which a frame of previously recorded digital video signals is reproduced from a 10-track segment during the playback period $x_2$. In the after-recording mode, although digital audio signals may also be reproduced from this same 10-track segment, those digital audio signals are ignored and, thus, to simplify the diagram, a unit of digital audio signals is not illustrated as being recorded in this 10-track segment.

As in the case of a normal record/playback operation, the reproduced digital video signals are decoded by the aforementioned digital processing circuitry which, as discussed above, exhibits an inherent time delay $t_2$. The decoded video signal is then recovered as the output video signal during the time interval $x_3$. The playback operation schematically represented in Figure 2B is substantially identical to the playback operation schematically illustrated in Figure 1B. Thus, a delay of about 25 tracks is present between the reproduction and the recovery (or output) of a given time point of a frame interval of the digital video signal.

In an after-recording operation, a unit of the audio signal that is associated with the reproduced video signal is supplied for recording substantially immediately after the video signal is recovered. This timing relationship is schematically illustrated in Figure 2C, wherein the audio signal to be after-recorded is supplied during an interval $x_4$ which is delayed by only 10 tracks (i.e. one frame interval) from the beginning of the frame interval of the recovered digital video signal with which this audio signal is to be associated. As before, this audio signal is encoded by digital audio processing circuitry exhibiting the inherent time delay $t_{11}$ (e.g. a 1-track delay) and the encoded digital audio signal is then delayed by the period $t_{12}$ before it is recorded.

When an audio signal is supplied for recording in the after-recording mode, the inherent delay of the digital audio processing circuitry, coupled with the additional delay normally imparted to the digital audio signal during a recording operation, results in a time delay of the order of 60 tracks from the location of a given time point in the digital video signal and the location of a corresponding time point in the after-recorded digital audio signal.

During a subsequent playback operation, the digital video signal is reproduced during the time interval $x_2$ and, 60 tracks later, the associated, after-recorded digital audio signal is reproduced during a time interval $x_5$. As before, the digital video signal is decoded by digital processing circuitry exhibiting the inherent time delay $t_2$ and is then recovered as an output video signal during the time interval $x_3$. The reproduced digital audio signal, on the other hand, is decoded by digital audio processing circuitry exhibiting the inherent time delay $t_{21}$, and the decoded audio signal is then delayed by the time delay $t_{22}$ such that the audio signal is recovered during the time interval $x_6$. A comparison of Figures 2B and 2C indicates that, when the audio signal is recorded in the after-recording mode, the fact that the audio signal is recorded in tracks delayed from those in which the video signal is recorded, coupled with the additional time delay normally added to the reproduced audio signal for the purpose of assuring synchronism between the recovered video and audio signals, results in a substantial time difference between the recovered digital video signal and the associated digital audio signal. This time difference is about 60 tracks, or 6 frames, which is approximately 0.2 seconds. Consequently, when a video picture is displayed from after-recorded signals, the video and audio signals are not in proper synchronism and "lip sync" is noticeable lost.

Further previously proposed VTRs using delay techniques to improve synchronisation between recorded video and audio signals are disclosed in US-A-4,761,693 and the abstract to JP-A-2094175.

This invention provides digital video tape recording/reproducing apparatus for recording and reproducing digital video and digital audio signals in separate portions of at least one common recording track, and being operable in an after-recording mode to record a digital audio signal that is associated with a previously recorded digital video signal in separate portions of different recording tracks, said apparatus comprising:

digital video processing means for processing a digital video signal reproduced from a recording track, said digital video processing means exhibiting an inherent time delay $t_2$;
digital audio processing means for processing a digital audio signal reproduced from a recording track, said digital audio processing means exhibiting an inherent time delay $t_{21}$, where $t_{21} < t_2$;
variable delay means for delaying the reproduced digital audio signal by an amount $\Delta$ substantially equal to $t_2 - t_{21}$, so that when digital video and digital audio signals are recorded concurrently, the reproduced digital video and digital audio signals are recovered in synchronism; and
delay adjustment means operable during recording of digital audio signals in said after-recording mode to reduce the delay $\Delta$ of said delay means.

Viewed from a second aspect this invention provides digital video tape recording/reproducing apparatus for recording and reproducing digital video and digital audio signals in separate portions of at least one common recording track, and being operable in an after-recording mode to record a digital video signal that is associated with a previously recorded digital audio signal in different recording tracks to the recording tracks in which said associated digital audio signal is recorded, said apparatus comprising:

digital video processing means for processing a digital video signal reproduced from a recording track, said digital video processing means exhibiting an inherent time delay $t_2$;
digital audio processing means for processing a digital audio signal reproduced from a recording track, said digital audio processing means exhibiting an inherent time delay $t_{21}$, where $t_{21} < t_2$;
variable delay means for delaying the reproduced digital audio signal by an amount $\Delta$ substantially equal to $t_2 - t_{21}$, so that when digital video and digital audio signals are recorded concurrently, said digital video and digital audio signals are reproduced and recovered in synchronism; and
delay adjustment means operable, during reproduction of digital audio signals when said digital video signals have been after-recorded to increase the delay $\Delta$ of said variable delay means so that the after-recorded digital video signal and said digital audio signal are reproduced and recovered substantially in synchronism.

In accordance with embodiments of this invention, digital video tape recording apparatus is provided for recording digital video and digital audio signals in separate portions of at least one common record track. The video signals are processed for recording and/or reproduction by processing circuitry exhibiting an inherent time delay $t_1$. Similarly, the audio signals are processed for recording and/or reproduction by audio processing circuitry exhibiting an inherent time delay $t_{11}$, where $t_1 \neq t_{11}$. The digital audio signal that is recorded and/or reproduced normally is delayed by an amount so that, during a normal reproducing mode, the digital video and audio signals are recovered in synchronism. The apparatus is operable in an after-recording mode to record digital audio signals or digital video signals after the normal recording operation has been completed. The aforementioned audio signal delay is adjusted in the after-recording mode so that a time difference that otherwise would be present between reproduced video and audio signals is minimized, or at least reduced. If digital audio signals are recorded in the after-recording mode, the time delay normally imparted to the audio signals is reduced to, for example, zero, thereby reducing any time difference between the recovered video signal and the recovered, after-recorded audio signal. Preferably, if the video signals are recorded in the after-recording mode, the video signals are recorded downstream of the previously recorded audio signals, and the delay normally imparted to the audio signals during a playback operation is increased such that the audio signals and after-recorded video signals are recovered in substantial time synchronism.

In at least the preferred embodiments to be described below, the invention provides an improved digital video tape recording apparatus operable in an after-recording mode which provides satisfactory synchronism between reproduced video and audio signals, resulting in acceptable lip sync; in which audio signals are selectively delayed during recording and/or reproduction so as to minimize a time difference between recovered video and audio signals which are separately processed by circuitry exhibiting different inherent delays; in which audio signals or video signals may be recorded in an after-recording mode, yet when the after-recorded signals are reproduced, time differences between the recovered video and audio signals are minimized or at least reduced; and wherein audio or video signals may be recorded in an after-recording mode, yet when those signals are reproduced, a video picture displayed therefrom exhibit proper lip sync between the movement and sounds of a subject.

The invention will now be described by way of example with reference to the accompanying drawings, in which:

Figures 1A to 1C are schematic representations of the timing relationship between video and audio signals that are recorded/reproduced in a normal mode of a previously proposed digital VTR;
Figures 2A to 2C are schematic representations of the timing relationship between the reproduction of video signals and after-recorded audio signals in the previously proposed digital VTR;

Figure 3 is a block diagram of a digital video tape recording/reproducing apparatus according to the invention;

Figures 4A to 4D are schematic representations of the timing relationship between the recording and reproduction of video and audio signals in both normal and after-recording modes, in accordance with one embodiment of the invention;

Figures 5A to 5D are schematic representations of the timing relationship between video and audio signals that are recorded and reproduced in both normal and after-recording modes, in accordance with another embodiment of the invention; and

Figures 6A to 6E are schematic representations of the timing relationship between video and audio signals that are recorded and reproduced when the video signals are recorded in the after-recording mode, in accordance with two further embodiments of the invention.

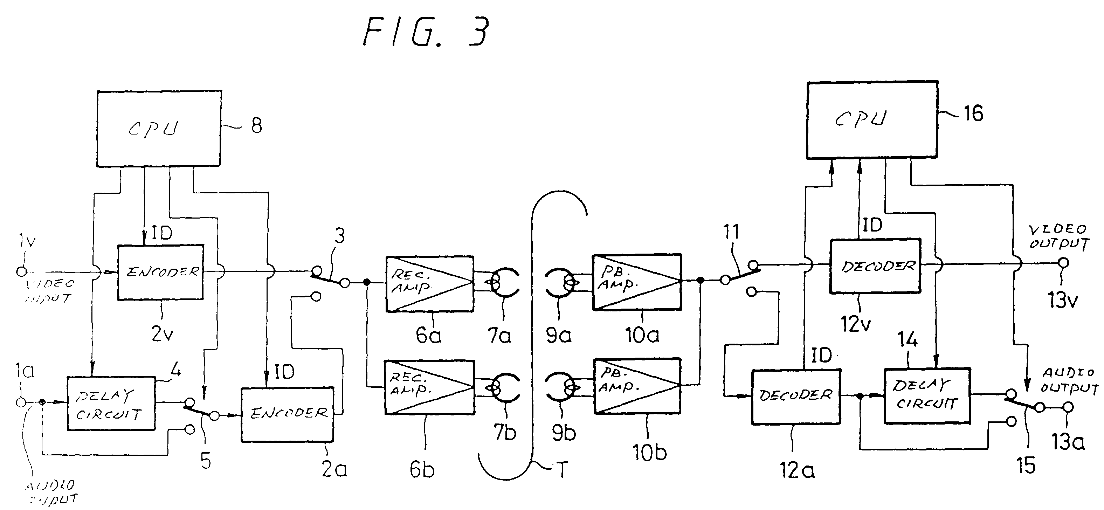

Referring now to Figure 3, a digital video tape recording/reproducing apparatus comprises a recording section having video and audio input terminals 1v and 1a, respectively, and signal processing circuitry for recording digital video and audio signals on a recording tape T; and a reproducing section including signal processing circuitry for reproducing the previously recorded digital video and audio signals and supplying the reproduced signals to video and audio output terminals 13v and 13a, respectively. The digital video processing circuitry of the recording section comprises an encoder 2v selectively coupled to two recording amplifiers 6a and 6b which, in turn, supply encoded digital video signals to two respective recording heads 7a and 7b for recording in successive tracks on the tape T (or another recording medium). The recording section also comprises digital audio processing circuitry comprising an encoder 2a which is selectively coupled to the recording amplifiers 6a and 6b. The heads 7a and 7b are mounted 180° apart on a rotary drum such that the heads 7a and 7b scan alternate recording tracks across the tape T to record the digital video and audio signals in successive, adjacent tracks. A selector switch 3 couples the digital video and audio signals alternately to the heads 7a and 7b such that when a head is in position for recording, the appropriate signals are supplied thereto.

The encoder 2v exhibits an inherent time delay $t_1$, so that the digital video signals that are supplied thereto from the input terminal 1v are processed with the inherent delay $t_1$. The encoder 2v is conventional and performs, inter alia, a shuffling of successive line intervals, as is known to those of ordinary skill in the digital video recording art.

The encoder 2a exhibits an inherent time delay $t_{11}$ ($t_{11} < t_1$) and performs, inter alia, an error correction coding operation. In view of the different time delays exhibited by the encoders 2v and 2a, it is conventional to employ a delay circuit 4 to delay the digital audio signal supplied to the encoder 2a from the input terminal 1a by a time delay $\Delta$, where $\Delta$ is approximately equal to $t_1 - t_{11}$. However, in accordance with this embodiment of the invention, the delay circuit 4 is bypassed when digital audio signals are recorded in an after-recording mode; and, in this regard, a selector switch 5 is selectively operable to couple to the encoder 2a either the digital audio signals delayed by the delay circuit 4 or the digital audio signals that are not subjected to such a time delay. Thus, the selector switch 5 may be thought of as being operable to selectively bypass the delay circuit 4.

A controller 8, such as a central processing unit (CPU), is coupled to the selector switch 5 and controls the operation of the selector switch 5 when the recording section operates in either its normal or after-recording mode of operation. More particularly, during a normal recording operation, the selector switch 5 couples the output of the delay circuit 4 to the encoder 2a. However, in an after-recording operation, the selector switch 5 bypasses the delay circuit 4 and couples the input digital audio signals directly to the encoder 2a without their being subjected to a time delay.

The CPU (or controller) 8 is also coupled to the encoder 2a to supply to the encoder 2a an after-recording identifying signal, referred to herein simply as an ID signal, thus indicating that the digital audio signal is being recorded in an after-recording mode. As will be described below, the ID signal is detected when the digital audio signal is reproduced and is used to select different delays in the reproducing section, depending upon whether the audio signal has been recorded in an after-recording mode. The selection of such delays is intended to minimize time differences that might otherwise be present in the recovery of digital video and audio signals that were subjected to after-recording, and which otherwise would result in a loss of lip sync.

The embodiment shown in Figure 3 is operable to record either digital audio or digital video signals in the after-recording mode. In this regard, the CPU is also coupled to the encoder 2v to supply an ID signal thereto when digital video signals are after-recorded. The ID signal supplied to either the digital audio encoder 2a or the digital video signal encoder 2v is recorded by the heads 7a and 7b. The ID signals may simply be time division multiplexed with the encoded digital audio or digital video signal.

In the embodiment described above, the selector switch 5 is used to selectively bypass the delay circuit 4 when, for example, digital audio signals are recorded in the after-recording mode. In another embodiment, the delay circuit 4 is an adjustable delay circuit and the CPU 8 is coupled thereto to supply a delay control signal for selectively adjusting the delay of the delay circuit 4. In the other embodiment, the delay exhibited by the adjustable delay circuit 4 is reduced, preferably to zero, when digital audio signals are recorded in the after-recording mode.

In both normal and after-recording operation, the selector switch 3 couples the digital video signal to, for example, the recording amplifier 6a for recording on the major portion of a recording track by the head 7a; and when the head 7a reaches the end portion of a track, the switch 3 changes over to couple the encoder 2a to the recording amplifier 6a, whereupon the digital audio signal is recorded in the end portion of the track. This operation of selector switch 3 is conventional and results in the track format schematically illustrated in, for example, Figure 1A. When the head 7b moves into position to scan a recording track across the tape T, the aforedescribed operation of the switch 3 is used to supply firstly video and then audio signals to the head 7b, to effect the recording of the track pattern shown in Figure 1A.

The reproducing section of the digital video tape recording apparatus shown in Figure 3 complements the recording section. Accordingly, the reproducing section comprises two playback amplifiers 10a and 10b, coupled to two respective reproducing heads 9a and 9b, for amplifying the digital video and audio signals reproduced from the successive recording tracks by the reproducing heads. In one embodiment, the reproducing and recording heads may be constituted by the very same transducers.

A selector switch 11, which may be similar to the selector switch 3, couples the playback amplifiers 10a and 10b to the video and audio processing circuitry, including a video decoder 12v and an audio decoder 12a. When the head 9a (or the head 9b) scans that portion of a recording track in which a digital video signal is recorded, the switch 11 couples the playback amplifier 10a (or 10b) to the digital video decoder 12v. Likewise, when the head 9a (or 9b) scans that portion of a track in which a digital audio signal is recorded, the switch 11 couples the playback amplifier 10a (or 10b) to the digital audio decoder 12a. The decoder 12v performs, inter alia, a "deshuffling" operation; and a decoded digital video output signal is supplied to the video output terminal 13v from the decoder 12v.

Similarly, the audio decoder 12a performs, inter alia, an error correcting operation. The resulting decoded digital audio signal is coupled from the decoder 12a to the output terminal 13a by way of a delay circuit 14. The decoder 12v exhibits an inherent time delay $t_2$ in decoding the digital video signal, and the decoder 12a exhibits an inherent time delay $t_{21}$ when decoding the digital audio signal. Since $t_{21} < t_2$, the delay circuit 14 "matches" these delays by imparting a further delay to the decoded digital audio signal. This additional delay $\Delta$ is approximately equal to $t_2 - t_{21}$. Hence, when the digital video tape recording apparatus is not operated in the after-recording mode, the delay $\Delta$ imparted by the delay circuit 14 minimizes any time difference between the digital video and digital audio signals supplied to the output terminals 13v and 13a, notwithstanding the different time delays imparted thereto by the decoders 12v and 12a, thus assuring that the video and audio signals are recovered in synchronism. Hence, lip sync is obtained.

When the digital video tape recording apparatus operates in the after-recording mode for the after-recording of digital audio signals, the delay $\Delta$ imparted by the delay circuit 14 is minimized (to be described below), or a selector switch 15, which is similar to the switch 5, operates to bypass the delay circuit 14 and to couple the decoded digital audio signals from the decoder 12a to the audio output terminal 13a. The selector switch 15 is controlled by a controller 16, such as a central processing unit (CPU) similar to the CPU 8. In one embodiment, the functions performed by the CPU 8 and the CPU 16 may be carried out by a single, common central processor. During a reproduction operation, when digital video and audio signals that had been recorded in a normal recording mode are reproduced, the CPU 16 operates the switch 15 to couple the decoded digital audio signals through the delay circuit 14 to the audio output terminal 13a. However, when the reproduced digital video and audio signals had been recorded in the after-recording mode, the CPU controls the switch 15 to bypass the delay circuit 14.

It is recalled that if the digital audio signal is recorded in the after-recording mode, an ID signal indicative of that mode is also recorded. The decoder 12a is coupled to the CPU 16, detects the ID signal and supplies the detected ID signal to the CPU 16. In response to this ID signal, the CPU 16 operates the switch 15 to bypass the delay circuit 14.

In another embodiment, the delay circuit 14 of the reproducing section of the digital video tape recording apparatus may be an adjustable delay circuit; and the CPU 16 is coupled thereto to supply a delay control signal for selectively adjusting the delay exhibited by this adjustable delay circuit. As will be described below, the delay exhibited by the adjustable delay circuit 14, like the delay exhibited by the adjustable delay circuit 4, is reduced, preferably to zero, when digital audio signals that had been recorded in the after-recording mode are reproduced.

As mentioned above, the embodiment of Figure 3 is also operable to record digital video signals in the after-recording mode. In this mode, the digital video signals are recorded in tracks delayed from those tracks in which their associated digital audio signals are recorded. Hence, during reproduction, the digital video signals are recovered at a time substantially delayed from the recovery of their associated digital audio signals, even when the digital audio signals are delayed by the delay circuit 14. To eliminate, or at least minimize this time difference, it is preferred to construct the delay circuit 14 as an adjustable delay device whose time delay is increased when reproducing after-recorded digital video signals. To effect this, the decoder 12v is coupled to the CPU 16 to supply to the CPU an indication that the ID signal, which is recorded when digital video signals are after-recorded, has been detected. The CPU 16 responds to the ID signal detected by the decoder 12v to supply a delay control signal to the adjustable delay circuit 14 to increase the delay exhibited thereby; and this delays the recovery of the digital audio signal such that output terminals 13v and 13a are supplied with digital video and audio signals in synchronism. Hence, even though the digital video signals are recorded in the after-recording mode, lip sync is obtained in the recovered video and audio signals.

As will be described, a unit, or frame, of digital video signals (in the NTSC format) is recorded in a 10-track segment and, in one embodiment, a unit of digital audio signals is also recorded in a 10-track segment. In other embodiments, conventional data compression techniques are used to record the unit of digital audio signals in a smaller number of tracks, such as in a 2-track segment, a 4-track segment, or the like.

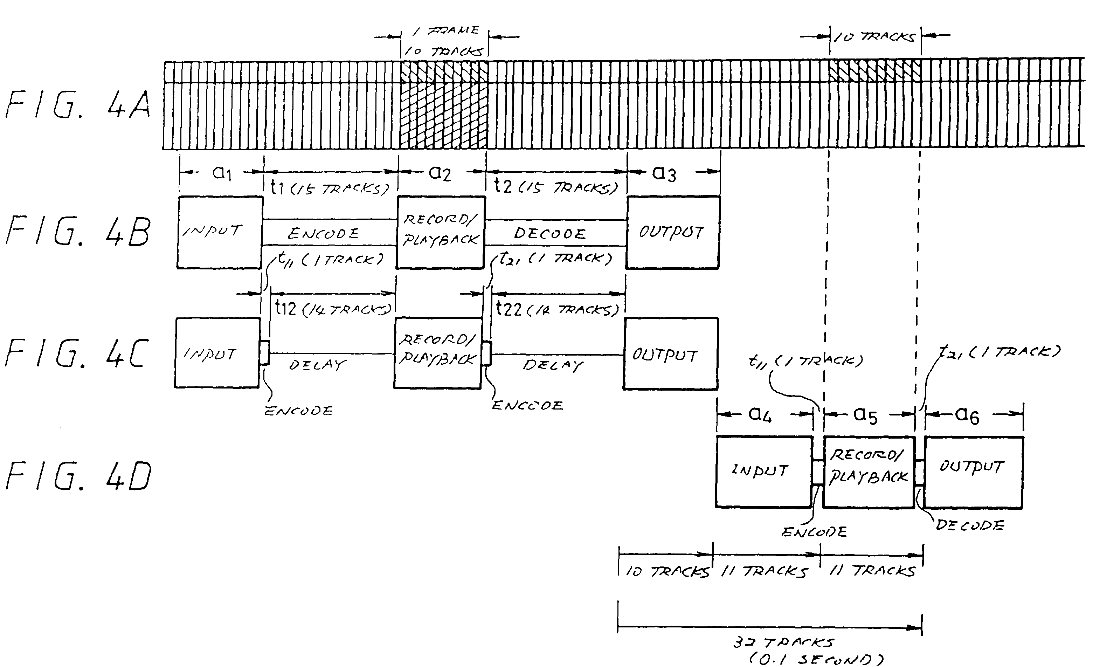

The manner in which digital video and audio signals are recorded and reproduced by the apparatus shown in Figure 3 will now be described with reference to the schematic representations shown in Figures 4A to 4D. Figures 4A to 4C are quite similar to the aforedescribed Figures 1A to 1C; and it is seen that, during a normal record/playback operation, a frame of digital video signals is supplied for recording during a period $a_1$ and is then encoded, to be recorded in a 10-track segment during a time interval $a_2$. Figure 4B illustrates the inherent time delay $t_1$ exhibited by the encoder 2v; this time delay $t_1$ is equivalent to a 15-track delay.

As illustrated in Figure 4C, a unit of digital audio signals is supplied for recording during the interval $a_1$; and this audio signal is encoded by the encoder 2a which exhibits the inherent time delay $t_{11}$. As before, $t_{11} < t_1$. It is preferred to record the digital audio signal in the same 10-track segment as the digital video signal, which is achieved by supplying the digital audio signal to the encoder 2a via the delay circuit 4. The delay circuit 4 imparts a time delay $t_{12}$ ($t_{12} = t_1 - t_{11}$) so as to bring the digital audio signals into time synchronism with the digital video signals. If the inherent delay of the encoder 2a is equivalent to a 1-track delay, the delay imparted by the delay circuit 4 is of the order of a 14-track delay. Hence, both the digital video and digital audio signals are recorded during the time interval $a_2$ in different portions of a common 10-track segment.

During reproduction, the digital video and audio signals recorded in the 10-track segment are reproduced by the head 9a (or 9b) during the time interval $a_2$. The reproduced digital video signals are supplied by the switch 11 to the decoder 12v in which they are decoded. As shown in Figure 4B, the decoder 12v exhibits an inherent time delay $t_2$ which is assumed herein to be substantially equal to the time delay exhibited by the encoder 2v. Thus, following a 15-track delay, the decoded digital video signals are recovered and are supplied to the video output terminal 13v during a time interval $a_3$.

The digital audio signals which are reproduced during the time interval $a_2$ are supplied by the switch 11 to the decoder 12a, in which they are decoded. The decoder 12a exhibits an inherent time delay $t_{21}$ which, for example, is substantially equal to the inherent time delay exhibited by the encoder 2a. From Figure 4C, it is seen that if the decoded digital audio signals are not delayed further, synchronism between the recovered digital video and audio signals would be lost. Accordingly, the decoded digital audio signals are supplied to the delay circuit 14 which imparts a delay $t_{22}$ ($t_{22} = t_2 - t_{21}$) so that the digital video and audio signals are recovered in synchronism. In the example discussed herein, the time delay $t_{22}$ is equivalent to a 14-track delay. Thus, a given time point in the unit of reproduced digital audio signals is in proper synchronism with a corresponding time point in the reproduced digital video signals.

Now, let it be assumed that the apparatus illustrated in Figure 3 operates in its after-recording mode for the after-recording of digital audio signals. A typical application of the after-recording mode is to effect "dubbing" of, for example, voice signals onto pre-recorded video signals. For example, if a video scene includes a human subject and a translation of voice signals uttered by that subject is to be dubbed, an after-recording operation is implemented. It is appreciated, then, that new audio signals which are to be dubbed, or after-recorded, are supplied substantially immediately after each frame of video signals with which those audio signals are associated is reproduced. The supply of new digital audio signals to be after-recorded is represented in Figure 4D, wherein such audio signals are supplied during the period $a_4$. It is seen that this period $a_4$ during which the digital audio signals are supplied for after-recording commences substantially immediately after the time interval $a_3$, which is the time interval during which the decoded video signals are recovered.

As in the case of a normal recording operation, the digital audio signals supplied during the time interval $a_4$ are encoded by the encoder 2a exhibiting the inherent time delay $t_{11}$. If the digital audio signals are supplied to the encoder by way of the delay circuit 4, the time delay between the recording of the digital video signals and the recording of the after-recorded digital audio signals (which are associated with those video signals) would be increased by 14 tracks, i.e. increased by the delay imparted by the delay circuit 4. In the after-recording mode, it is desirable to minimize the delay between the recording of digital video signals and the after-recorded digital audio signals. Consequently, when operating in the after-recording mode, the selector switch 5 is operated by the CPU 8 to bypass the delay circuit 4, thereby reducing the delay imparted to the digital audio signals to zero. Alternatively, if the delay circuit 4 comprises an adjustable delay device, the CPU 8 reduces the adjustable delay to a minimum value, such as zero. Accordingly, the encoded digital audio signal is recorded during the time interval as which is delayed substantially only by the inherent delay $t_{11}$ of the encoder 2a. The encoded digital audio signal is recorded after a 1-track delay, i.e.

11 tracks after the recovery of the digital video signal with which this after-recorded audio signal is associated. Hence, a given time period in the digital audio signal is delayed by 21 tracks from a corresponding time period in the recovered digital video signal. In other words, in the after-recording mode, the delay normally imparted to the digital audio signal relative to the recording of a digital video signal is minimized.

When the digital video signal and its associated after-recorded digital audio signal are played back, the delay normally imparted to the reproduced digital audio signal is minimized. From Figures 4A, 4B and 4D, it is recognised that the after-recorded digital audio signal is recorded 36 tracks downstream of its associated digital video signal. When these signals are reproduced, the digital video signal is recovered during the time interval $a_3$ and then, 21 tracks later, the associated, after-recorded digital audio signal is reproduced during the time interval $a_5$. As in the case of normal recording/reproducing, the reproduced digital audio signal is decoded by the decoder 12a which exhibits the inherent time delay $t_{21}$. Again, to minimize the time difference between a given point in the recovered digital video signal and the corresponding point in the recovered digital audio signal, the delay normally imparted to the decoded digital audio signal by the delay circuit 14 is minimized. This is achieved by the switch 15, under the control of the CPU 16, which bypasses the delay circuit 14 and couples the output of the decoder 12a directly to the audio output terminal 13a. Thus, after the 1-track delay in the decoded digital audio signal attributed to the decoder 12a, the digital audio signal is recovered as an output audio signal during a time interval $a_6$.

Alternatively, if the delay circuit 14 is an adjustable delay device, this device is controlled by the CPU to minimise the delay imparted thereby.

Thus, whereas in the previously proposed digital VTR described with reference to Figures 1A to 1C and 2A to 2C an after-recorded digital audio signal is recovered 60 tracks later than its associated digital video signal, resulting in a time difference of about 0.2 seconds between a given time point in the digital video signal and a corresponding time point in the digital audio signal, in the present embodiments this time difference is reduced to only 32 tracks (ie approximately 0.1 seconds). This reduced time difference, or delay, is not readily noticeable in a video picture displayed from the recovered video and audio signals, which means that lip sync is substantially maintained between a human subject and the voice signals emitted therefrom.

When digital audio signals are recorded in the after-recording mode, a suitable after-recording control signal (not shown) is supplied to the CPU 8 which, in turn, generates and couples the aforementioned ID signal to the encoder 2a. This ID signal is recorded along with the after-recorded digital audio signal. During a reproducing mode, the decoder 12a detects this ID signal in the reproduced digital audio signal and supplies an indication thereof to the CPU 16. The CPU 16 responds to this detected ID signal either to control the switch 15 to bypass the delay circuit 14 or, alternatively, to reduce the delay imparted by the delay circuit 14 to zero.

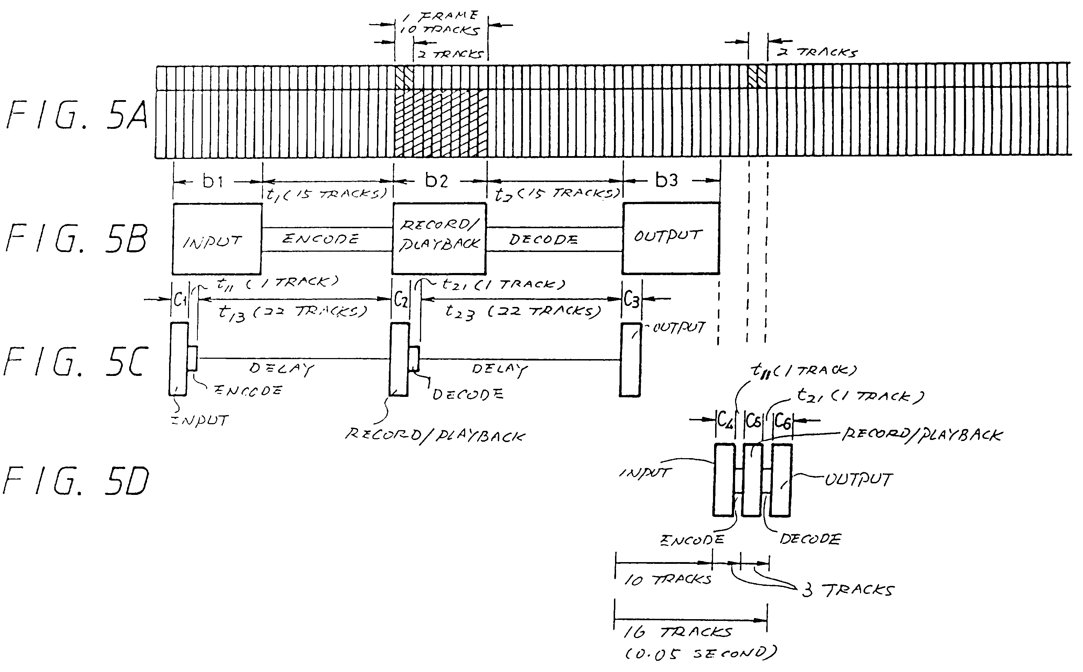

In the embodiments described with reference to Figures 4A to 4D, it is assumed that the unit of encoded digital audio signals is equal to a frame interval and, thus, is recorded in a 10-track segment. However, it is known that the encoder 2a may encode the digital audio signal in a compressed form to constitute a "unit" which is substantially smaller than a frame interval and, thus, may be recorded in a lesser number of tracks. For example, the encoder 2a may encode the digital audio signal into a "unit" which may be satisfactorily recorded in only two tracks. Likewise, the decoder 12a may decode and recover the digital audio signal from such a 2-track segment. The encoding/decoding of digital audio signals in units that are smaller than a video frame interval is represented by the schematic representations of Figures 5A to 5D.

Figure 5A illustrates the recording of a frame interval of digital video signals in a 10-track segment and the recording of digital audio signals associated therewith in a 2-track segment. As before, a frame of digital video signals is supplied for recording during a period $b_1$; and this frame is encoded by the encoder 2v for recording in the 10-track segment during a time interval $b_2$. Consistent with the examples described above, the encoder 2v exhibits the inherent time delay $t_1$ which is equal to a 15-track delay. The encoded digital video signal is then recorded in a 10-track segment during the time interval $b_2$.

While the digital video signal is supplied, encoded and recorded, the digital audio signal is also supplied for recording; but in this embodiment the digital signal is supplied as a unit for recording in a 2-track segment. The digital audio signal is supplied during a time interval $c_1$; and, like the aforedescribed embodiment, the digital audio signal is then encoded by the encoder 2a which exhibits the inherent time delay $t_{11}$. As before, this time delay $t_{11}$ is of the order of a 1-track delay.

During a normal recording operation, the digital audio signal is recorded in at least some of the same tracks as the digital video signal. This is achieved by the delay circuit 4 delaying the encoded digital audio signal by a suitable time delay. In the present embodiment, the delay circuit 4 imparts a time delay $t_{13}$ to the encoded digital audio signal, wherein $t_{13}$ is approximately 22 tracks. Then, the delayed, encoded digital audio signal is recorded during a time interval $c_2$. A comparison of Figures 5B and 5C indicates that the beginning of a frame of digital video signals is recorded in the same track as the beginning of the encoded digital audio signal associated therewith.

When the digital video and audio signals are reproduced during normal mode reproduction, the digital video signal in the 10-track segment is played back during the time interval $b_2$ and the digital audio signal in the 2-track segment is played back during the time interval $c_2$. As before, the reproduced video signal is decoded by the decoder 12v, which exhibits an inherent time delay $t_2$ of the order of 15 tracks; and the reproduced audio signal is decoded by the decoder 12a having an inherent time delay $t_{21}$ which is of the order of 1 track. To provide synchronism between the decoded digital video and audio signals, the audio signal is delayed by the delay circuit 14, which imparts a time delay $t_{23}$, of the order of 22 tracks. Hence, the decoded digital video and digital audio signals are recovered in synchronism during the time intervals $b_3$ and $c_3$, respectively. That is, even through the digital video signal is recorded in a 10-track segment, the audio signal associated with a frame of video signals is recovered in synchronism therewith.

Figure 5D illustrates the timing relationship between digital audio signals recorded as a 2-track unit in the after-recording mode and the digital video signals which are recorded as a 10-track unit. The digital audio signals are supplied during a time interval $c_4$ substantially immediately following the recovery of an associated frame of digital video signals. The supplied digital audio signals are encoded and are then recorded during a time interval $c_5$. As in the normal recording mode, the encoder 2a exhibits an inherent time delay $t_{11}$, of the order of 1 track. Thus, in the after-recording mode, when a unit of audio signals is recorded, it is recorded in a 2-track segment that is delayed from the recording of its associated digital video signal by 38 tracks.

When the digital video signal and its associated after-recorded digital audio signal are reproduced, the digital video signal is reproduced during the time interval $b_2$ and the digital audio signal is reproduced during the time interval $c_5$. These signals are respectively decoded, with the decoder 12v exhibiting the inherent time delay $t_2$ (approximately equal to 15 tracks) and the decoder 12a exhibiting the inherent time delay $t_{21}$ (approximately equal to 1 track). Since the digital audio signals are not subjected to additional delays by the delay circuits 4 and 14 in the after-recording mode, and since the digital audio signals are supplied in units that are approximately equal to 2-track segments, it is seen that the after-recorded digital audio signal is recovered during time interval $c_6$ which is delayed from the time interval $b_3$, during which the digital video signal is recovered, by 16 tracks. This delay is equal to 1.6 frames, or approximately 0.05 seconds.

It will be appreciated, therefore, that when digital audio signals are recorded as units exhibiting a duration much less than a video frame interval, the time difference between recovered digital audio signals and recovered, after-recorded digital audio signals is minimal. This time difference is sufficiently small as not to be noticeable in a video picture. Hence, lip sync is substantially maintained.

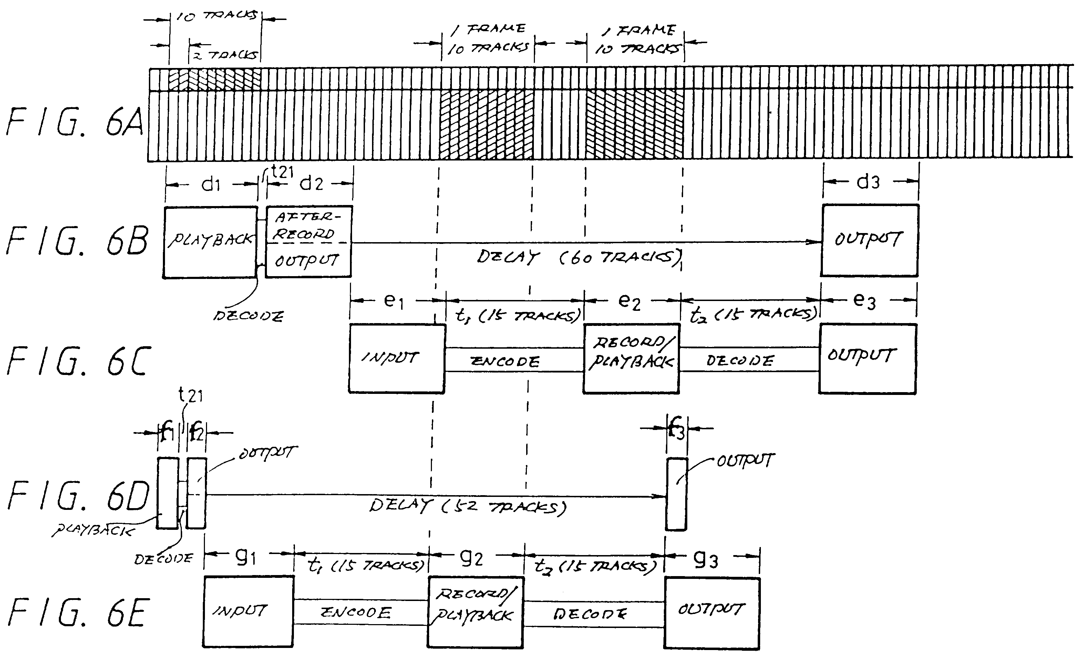

The situation will now be described in which the video signal is after-recorded. Referring to Figures 6A to 6C, let it be assumed that the digital audio signals are recorded as units in 10-track segments, similar to the digital video signals. As can be seen from Figures 6A and 6B, the digital audio signal is reproduced from the 10-track segment during a time interval $d_1$. The played-back digital audio signal is decoded by the decoder 12a, which exhibits the inherent time delay $t_{21}$, and is then ready for recovery. If the delay circuit 14 is bypassed by the switch 15 or, alternatively, if the delay imparted by the delay circuit 14 is reduced to zero, the decoded digital audio signal is recovered during the time interval $d_2$. However, when the digital video signal is recorded in the after-recording mode and is then reproduced from the record medium, the delay imparted to the decoded digital audio signal by the delay circuit 14 is increased so as to match the delay attending the recording and reproduction of the after-recorded digital video signal.

As can be seen from Figure 6C, the digital video signal is supplied for after-recording substantially immediately after the recovery of the digital audio signal with which the video signal is associated. For example, a new video scene may be dubbed onto the recording medium, to be associated with previously recorded audio signals. A digital video signal is thus supplied for after-recording during a time interval $e_1$ which is delayed by 10 tracks from the recovery of the digital audio signal. As before, the digital video signal is encoded by the encoder 2v, which exhibits an inherent time delay $t_1$ (of the order of 15 tracks) and is then recorded by the head 7a (or 7b) during a time interval $e_2$. It is seen, then, that the after-recording digital video signal is recorded in tracks that are delayed from the digital audio signal by 46 tracks.

When the digital audio and after-recorded digital video signals are reproduced, the digital audio signal is once again played back during the time interval $d_1$ and is decoded with a time delay $t_{21}$. The delay circuit 14 is now adjusted by the CPU 16 to exhibit an increased time delay which will now be explained.

Forty-six tracks after the beginning of the reproduced digital audio signal, the after-recorded digital video signal is played back. The video signal is reproduced during the time interval $e_2$ and is decoded by the decoder 12v, which exhibits an inherent time delay $t_2$ of the order of about 15 tracks. Then, the decoded, after-recorded digital video signal is recovered during a time interval $e_3$.

From Figure 6C, it is appreciated that the after-recorded digital video signal is played back 46 tracks after its associated digital audio signal is reproduced. As a result of the inherent time delay of the decoder 12v, the after-recorded digital video signal is recovered 61 tracks after the associated digital audio signal is reproduced. Since the decoder 12a exhibits an inherent 1-track delay, in order for the after-recorded digital video signal and the digital audio signal to be recovered in synchronism, that is, with essentially no time difference therebetween, the delay circuit 14 imparts a 60-track delay to the decoded digital audio signal. As a result of this delay, the digital audio signal is recovered during a time interval $d_3$ which substantially coincides with the time interval $e_3$ during which the after-recorded digital video signal is recovered.

The foregoing delay may be expressed mathematically as follows: if T is the cumulative delay in supplying the digital video signal for recording, plus the time for reproducing the after-recorded digital video signal, then $T = t_{21} + d_2 + e_1 + e_2 = 31$ tracks. The inherent delay of the encoder 2v is $t_1 = 15$ tracks and the inherent delay of the decoder 12v is $t_2 = 15$ tracks. Now, the delay $\Delta$ imparted to the decoded digital audio signal so that time interval $d_3$ coincides with time interval $e_3$ is:

$$\Delta = t_1 + (t_2 - t_{21}) + T$$

$$\Delta = 15 + 14 + 31$$

$$\Delta = 60$$

When the digital video signal is recorded in the after-recording mode, the CPU 8 supplies the aforementioned ID signal to the encoder 2v for recording with the video signal. This recorded ID signal is detected by the decoder 12v which, in turn, supplies a suitable indication to the CPU 16, whereby the delay imparted by the delay circuit 14 is increased under CPU control.

As an alternative, a fixed delay may be selectively connected in cascade (or series) with the delay circuit 14 and selected by the switch 15 when the digital audio signals are reproduced while the digital video tape recording apparatus operates in its after-recording playback mode. In either embodiment, by increasing the delay of the decoded digital audio signal when after-recorded digital video signals are played back, the video and audio signals are recovered in synchronism and lip sync is maintained.

In the foregoing description of the after-recording of digital video signals, it has been assumed that a unit of digital audio signals is recorded in a 10-track segment. It will be appreciated that the digital audio signals may be recorded in smaller units, such as in 2-track segments. The relationship between the reproduction of such digital audio signals and the after-recording and reproduction of digital video signals is illustrated in Figures 6D and 6E. A 2-track unit of digital audio signals is reproduced during a time interval $f_1$; and after decoding, is provided as an output signal during a time interval $f_2$. As before, the decoder used to decode the digital audio signals is assumed to exhibit an inherent time delay $t_{21}$, which is approximately equal to 1 track.

Substantially immediately after the digital audio signal is recovered, a digital video signal is supplied for after-recording. As shown in Figure 6E, this digital video signal is supplied during a time interval $g_1$. Then, the digital video signal is encoded by the encoder 2v, exhibiting the inherent time delay $t_1$ (equal to about 15 tracks) and is recorded during a time interval $g_2$. A comparison of Figures 6D and 6E indicates that a frame of after-recorded digital video signals is recorded in a 10-track segment that is delayed by 30 tracks from the 2-track segment in which the associated digital audio signal is recorded.

During reproduction, the digital audio signals are played back during the time interval $f_1$, are decoded by the decoder 12a and are then delayed by the delay circuit 14 by an amount sufficient to eliminate a time difference that would otherwise appear between the digital audio signal and the recovered, after-recorded digital video signal. The amount of this time delay will now be described.

As can be seen from Figure 6E, the after-recorded digital video signals are reproduced during a time interval $g_2$ which is delayed by 30 tracks from the reproduced digital audio signal. As before, the video signal is decoded by the decoder 12v, which exhibits an inherent time delay $t_2$ (of the order of about 15 tracks) and is recovered as a video output signal during a time interval $g_3$.

The delay circuit 14 imparts a time delay to the decoded digital audio signal sufficient to bring the interval $f_3$, during which the digital audio signal is recovered, into synchronism with the time interval $g_3$. That is, the beginning of the recovered digital audio signal is brought into time coincidence with the beginning of the recovered, after-recorded digital video signal. Using the foregoing mathematical analysis, it is seen that $T = t_{21} + f_2 + g_1 + g_2 = 23$ tracks; and $\Delta = t_1 + (t_2 - t_{21}) + T = 15 + 14 + 23 = 52$ tracks. Thus, the delay circuit 14 imparts a delay equivalent to 52 tracks; and as a result thereof, lip sync between the video and audio portions of a video picture is maintained.

While the invention has been particularly shown and described with reference to preferred embodiments, it will be readily appreciated by those of ordinary skill in the art that various changes and modifications may be made without departing from the scope of the invention. For example, it has been assumed that the inherent time delays exhibited by the video encoder and decoder are equal to each other and, likewise, that the inherent time delays exhibited by the audio encoder and decoder are equal to each other. These time delays may differ. It has also been assumed that two recording/reproducing heads are used for scanning successive tracks across the record medium, these heads being mounted on a rotary drum and spaced apart by 180°. If desired, a greater number of heads may be mounted on the rotary drum. Furthermore, although the CPUs 8 and 16 are illustrated as separate processing devices, a single microprocessor may be used to carry out the operations of both the CPU 8 and the CPU 16. Although the digital audio signals are illustrated as being recorded in a smaller upper portion of the record tracks, while the digital video signals are recorded in the major portion of such tracks, the digital audio signals may, alternatively, be recorded in the lower portions of such tracks. The digital video signal has been shown as an NTSC signal recorded in a 10-track segment. As an alternative, the digital video signal may be a PAL video signal recorded in a 12-track segment. Also, although a unit of a digital audio signal has been described as equivalent to a 10-track or 2-track unit, it will be appreciated that units of other sizes may be used for encoding and recording the audio signal, as may be desired.

**Claims**

1. Digital video tape recording/reproducing apparatus for recording and reproducing digital video and digital audio signals in separate portions of at least one common recording track, and being operable in an after-recording mode to record a digital audio signal that is associated with a previously recorded digital video signal in separate portions of different recording tracks, said apparatus comprising:

digital video processing means (12v) for processing a digital video signal reproduced from a recording track, said digital video processing means (12v) exhibiting an inherent time delay $t_2$;

digital audio processing means (12a) for processing a digital audio signal reproduced from a recording track, said digital audio processing means (12a) exhibiting an inherent time delay $t_{21}$, where $t_{21} < t_2$;

variable delay means (14) for delaying the reproduced digital audio signal by an amount $\Delta$ substantially equal to $t_2 - t_{21}$, so that when digital video and digital audio signals are recorded concurrently, the reproduced digital video and digital audio signals are recovered in synchronism; and

delay adjustment means (14, 15, 16) operable during recording of digital audio signals in said after-recording mode to reduce the delay $\Delta$ of said delay means (14).

2. Apparatus according to claim 1, wherein said delay adjustment means (14, 15, 16) comprises a bypass means (15) for bypassing said delay means (14) when an after-recorded digital audio signal is reproduced from a different track to the track from which an associated digital video signal is reproduced.

3. Apparatus according to claim 2, wherein the after-recorded digital audio signal comprises an identification (ID) signal indicative of the after-recording mode; said digital audio processing means (12a) comprises means for detecting said ID signal; and said bypass means (15) comprises a bypass switch (15) responsive to the detected ID signal for bypassing said delay means (14).

4. Apparatus according to claim 1, wherein said delay adjustment means (14, 15, 16) comprises a control means (16) for reducing the delay $\Delta$ of said delay means (14) when an after-recorded digital audio signal is reproduced from a different track to the track from which an associated digital video signal is reproduced.

5. Apparatus according to claim 4, wherein the after-recorded digital audio signal comprises an identification (ID) signal indicative of the after-recording mode; said digital audio processing means (12a) comprises means for detecting said ID signal; and said control means (16) is responsive to the detected ID signal to reduce the delay $\Delta$ of said delay means (14).

6. Apparatus according to claim 1, wherein a frame of said digital video signal is recorded in $n_1$ tracks, and the digital audio signal associated with said frame of digital video signal is recorded in $n_2$ tracks.

7. Digital video tape recording/reproducing apparatus for recording and reproducing digital video and digital audio signals in separate portions of at least one common recording track, and being operable in an after-recording mode to record a digital video signal that is associated with a previously recorded digital audio signal in different recording tracks to the recording tracks in which said associated digital audio signal is recorded, said apparatus comprising:

digital video processing means (12v) for processing a digital video signal reproduced from a recording track, said digital video processing means (12v) exhibiting an inherent time delay $t_2$;

digital audio processing means (12a) for processing a digital audio signal reproduced from a recording track, said digital audio processing means (12a) exhibiting an inherent time delay $t_{21}$, where $t_{21} < t_2$;

variable delay means (14) for delaying the reproduced digital audio signal by an amount $\Delta$ substantially equal to $t_2 - t_{21}$, so that when digital video and digital audio signals are recorded concurrently, said digital video and digital audio signals are reproduced and recovered in synchronism; and

delay adjustment means (14, 16) operable, during reproduction of digital audio signals when said digital video signals have been after-recorded to increase the delay $\Delta$ of said variable delay means (14) so that the after-recorded digital video signal and said digital audio signal are reproduced and recovered substantially in synchronism.

8. Apparatus according to claim 7, wherein an after-recorded digital video signal is supplied for after-recording substantially immediately after the associated digital audio signal is reproduced, and is recorded after a time delay $t_1$; and wherein said delay adjustment means (14, 16) is operable to increase the delay of said variable delay means (14) such that $\Delta = t_1 + (t_2 - t_{21}) + T$, where T is the cumulative delay in supplying the digital video signal for after-recording and in reproducing the after-recorded digital video signal.

9. Apparatus according to claim 7, wherein the after-recorded digital video signal includes an identification (ID) signal indicative of the after-recording mode, said digital video processing means (12v) comprises means for detecting said ID signal; and said delay adjustment means (14, 16) comprises means responsive to the detected ID signal to increase the delay $\Delta$ of said variable delay means (14).

10. Apparatus according to claim 7, wherein a frame of said digital video signal is recorded in $n_1$ tracks and the digital audio signal associated therewith is recorded in $n_2$ tracks.

11. Apparatus according to claim 10, wherein $n_1 = n_2$.

12. Apparatus according to claim 6 or claim 10, wherein $n_1 > n_2$.

13. Apparatus according to claim 10, wherein said $n_1$ tracks are recorded at a position delayed from said $n_2$ tracks, when the digital video signal is recorded in the after-recording mode.

**Patentansprüche**

1. Digitale Video-Bandaufzeichnungs/Wiedergabe-Vorrichtung zum Aufzeichnen und Wiedergeben digitaler Video- und digitaler Audiosignale in getrennten Teilen zumindest einer gemeinsamen Aufzeichnungsspur, die in einer Nachaufzeichnungs-Betriebsart betreibbar ist, um ein digitales Audiosignal, das einem vorher aufgezeichneten digitalen Videosignal zugeordnet ist, in getrennten Teilen unterschiedlicher Aufzeichnungsspuren aufzuzeichnen, welche Vorrichtung umfaßt:

ein digitales Videoverarbeitungsmittel (12v) zum Verarbeiten eines digitalen Videosignals, das von einer Aufzeichnungsspur wiedergegeben ist, welches digitale Videoverarbeitungsmittel (12v) eine innewohnende Zeitverzögerung $t_2$ aufweist,
ein digitales Audioverarbeitungsmittel (12a) zum Verarbeiten eines digitalen Audiosignals, das von einer Aufzeichnungsspur wiedergegeben ist, welches digitale Audioverarbeitungsmittel (12a) eine innewohnende Zeitverzögerung $t_{21}$ aufweist, wobei $t_{21} < t_2$ ist,
ein variables Verzögerungsmittel (14) zum Verzögern des wiedergegebenen digitalen Audiosignals um einen Betrag, der im wesentlichen gleich $t_2 - t_{21}$ ist, so daß wenn digitale Video- und digitale Audiosignale gleichzeitig aufgezeichnet werden, die wiedergegebenen digitalen Video- und digitalen Audiosignale in Synchronismus wiedergewonnen werden, und Verzögerungseinstellmittel (14, 15, 16), die während des Aufzeichnens von digitalen Audiosignalen in der Nachaufzeichnungs-Betriebsart betreibbar sind, um die Verzögerung $\Delta$ des Verzögerungsmittels (14) zu verringern.

2. Vorrichtung nach Anspruch 1, bei der die Verzögerungseinstellmittel (14, 15, 16) ein Überbrückungsmittel (15) umfassen zum Überbrücken des Verzögerungsmittels (14), wenn ein nachaufgezeichnetes digitales Audiosignal von einer Spur wiedergegeben wird, die verschieden von der Spur ist, von der ein zugeordnetes digitales Videosignal wiedergegeben wird.

3. Vorrichtung nach Anspruch 2, wobei das nachaufgezeichnete digitale Audiosignal ein Identifizierungs- (ID-) Signal enthält, das bezeichnend für die Nachaufzeichnungs-Betriebsart ist, wobei das digitale Audioverarbeitungsmittel (12a) ein Mittel zum Erfassen des ID-Signals umfaßt und wobei das Überbrückungsmittel (15) aus einem Überbrückungsschalter (15) besteht, der zum Überbrücken des Verzögerungsmittels (14) auf das erfaßte ID-Signal reagiert.

4. Vorrichtung nach Anspruch 1, bei der die Verzögerungseinstellmittel (14, 15, 16) ein Steuermittel (16) umfassen zum Verringern der Verzögerung $\Delta$ des Verzögerungsmittels (14), wenn ein nachaufgezeichnetes digitales Audiosignal von einer Spur wiedergegeben wird, die verschieden von der Spur ist, von der ein zugeordnetes digitales Videosignal wiedergegeben wird.

5. Vorrichtung nach Anspruch 4, wobei das nachaufgezeichnete digitale Audiosignal ein Identifizierungs- (ID-)Signal enthält, das bezeichnend für die Nachaufzeichnungs-Betriebsart ist, wobei das digitale Audioverarbeitungsmittel (12a) ein Mittel zum Erfassen des ID-Signals umfaßt und wobei das Steuermittel (16) auf das erfaßte ID-Signal reagiert,

um die Verzögerung $\Delta$ des Verzögerungsmittels (14) zu verringern.

6. Vorrichtung nach Anspruch 1, wobei ein Teilbild des digitalen Videosignals in $n_1$ Spuren aufgezeichnet wird und wobei das digitale Audiosignal, welches dem Teilbild des digitalen Videosignals zugeordnet ist, in $n_2$ Spuren aufgezeichnet wird.

7. Digitale Video-Bandaufzeichnungs/Wiedergabe-Vorrichtung zum Aufzeichnen und Wiedergeben digitaler Video- und digitaler Audiosignale in getrennten Teilen zumindest einer gemeinsamen Aufzeichnungsspur, die in einer Nachaufzeichnungs-Betriebsart betreibbar ist, um ein digitales Videosignal, das einem vorher aufgezeichneten digitalen Audiosignal zugeordnet ist, in Aufzeichnungsspuren aufzuzeichnen, die unterschiedlich von den Aufzeichnungsspuren sind, in denen das zugeordnete digitale Audiosignal aufgezeichnet wird, welche Vorrichtung umfaßt:

ein digitales Videoverarbeitungsmittel (12v) zum Verarbeiten eines digitalen Videosignals, das von einer Aufzeichnungsspur wiedergegeben ist, welches digitale Videoverarbeitungsmittel (12v) eine innewohnende Zeitverzögerung $t_2$ aufweist,
ein digitales Audioverarbeitungsmittel (12a) zum Verarbeiten eines digitalen Audiosignals, das von einer Aufzeichnungsspur wiedergegeben ist, welches digitale Audioverarbeitungsmittel (12a) eine innewohnende zeitverzögerung $t_{21}$ aufweist, wobei $t_{21} < t_2$ ist,
ein variables Verzögerungsmittel (14) zum Verzögern des wiedergegebenen digitalen Audiosignals um einen Betrag $\Delta$, der im wesentlichen gleich $t_2 - t_{21}$ ist, so daß wenn digitale Video- und digitale Audiosignale gleichzeitig aufgezeichnet werden, die digitalen Video- und digitalen Audiosignale in Synchronismus wiedergegeben und wiedergewonnen werden, und Verzögerungseinstellmittel (14, 16), die während des Wiedergebens von digitalen Audiosignalen betreibbar sind, wenn die digitalen Videosignale nachaufgezeichnet worden sind, um die Verzögerung $\Delta$ des Verzögerungsmittels (14) zu erhöhen, so daß das nachaufgezeichnete digitale Videosignal und das digitale Audiosignal im wesentlichen in Synchronismus wiedergegeben und wiedergewonnen werden.

8. Vorrichtung nach Anspruch 7, wobei ein nachaufgezeichnetes digitales Videosignal im wesentlichen unmittelbar, nachdem das zugeordnete digitale Audiosignal wiedergegeben ist, zum Nachaufzeichnen zugeführt wird und nach einer zeitverzögerung $t_1$ aufgezeichnet wird und wobei die Verzögerungseinstellmittel (14, 16) betreibbar sind, um die Verzögerung des variablen Verzögerungsmittels (14) derart zu erhöhen, daß

$$\Delta = t_1 + (t_2 - t_{21}) + T$$

ist, wobei T die kumulative Verzögerung beim Zuführen des digitalen Videosignals zum Nachaufzeichnen und beim Wiedergeben des nachaufgezeichneten digitalen Videosignals ist.

9. Vorrichtung nach Anspruch 7, wobei das nachaufgezeichnete digitale Videosignal ein Identifizierungs- (ID-) Signal enthält, das bezeichnend für die Nachaufzeichnungs-Betriebsart ist, wobei das digitale Videoverarbeitungsmittel (12v) ein Mittel zum Erfassen des ID-Signals umfaßt und wobei die Verzögerungseinstellmittel (14, 16) ein Mittel umfassen, das auf das erfaßte ID-Signal reagiert, um die Verzögerung $\Delta$ des variablen Verzögerungsmittels (14) zu erhöhen.

10. Vorrichtung nach Anspruch 7, bei der ein Teilbild des digitalen Videosignals in $n_1$ Spuren aufgezeichnet wird und das diesem zugeordnete digitale Audiosignal in $n_2$ Spuren aufgezeichnet wird.

11. Vorrichtung nach Anspruch 10, wobei $n_1 = n_2$ ist.

12. Vorrichtung nach Anspruch 6 oder nach Anspruch 10, wobei $n_1 > n_2$ ist.

13. Vorrichtung nach Anspruch 10, bei der die $n_1$ Spuren in einer Position aufgezeichnet werden, die gegenüber den $n_2$ Spuren verzögert ist, wenn das digitale Videosignal in der Nachaufzeichnungs-Betriebsart aufgezeichnet wird.

**Revendications**

1. Appareil d'enregistrement/reproduction à bande vidéo numérique pour l'enregistrement et la reproduction de signaux vidéo numériques et audio numériques dans des parties séparées au moins d'une piste commune d'enregistrement, et pouvant fonctionner en mode de post-enregistrement pour enregistrer un signal audio numérique associé à un signal vidéo numérique enregistré antérieurement dans des parties séparées de différentes pistes d'enregistrement, ledit appareil comprenant :

- un moyen (12v) de traitement vidéo numérique pour traiter un signal vidéo numérique reproduit depuis une piste d'enregistrement, ledit moyen (12v) de traitement vidéo numérique présentant un retard intrinsèque $t_2$ ;

- un moyen (12a) de traitement audio numérique pour traiter un signal audio numérique reproduit depuis une piste d'enregistrement, ledit moyen (12a) de traitement audio numérique présentant un retard intrinsèque $t_{21}$, où $t_{21} < t_2$ ;
- un moyen (14) à retard variable pour retarder le signal audio numérique reproduit d'un retard $\Delta$ sensiblement égal à $t_2 - t_{21}$, de sorte que lorsque des signaux vidéo numériques et audio numériques sont enregistrés en même temps, les signaux vidéo numériques et audio numériques reproduits sont récupérés en synchronisme ; et
- des moyens (14, 15, 16) de réglage du retard pouvant fonctionner pendant l'enregistrement de signaux audio numériques dans ledit mode de post-enregistrement pour réduire le retard $\Delta$ dudit moyen (14) à retard.

2. Appareil selon la revendication 1, dans lequel lesdits moyens (14, 15, 16) de réglage du retard comprennent un moyen (15) de contournement pour contourner ledit moyen (14) à retard lorsqu'un signal audio numérique post-enregistré est reproduit depuis une piste différente de la piste depuis laquelle un signal vidéo numérique associé est reproduit.

3. Appareil selon la revendication 2, dans lequel le signal audio numérique post-enregistré comprend un signal d'identification (ID) indiquant le mode de post-enregistrement ; ledit moyen (12a) de traitement audio numérique comprend un moyen pour détecter ledit signal ID; et ledit moyen (15) de contournement comprend un commutateur (15) de contournement sensible au signal détecté ID pour contourner ledit moyen (14) à retard.

4. Appareil selon la revendication 1, dans lequel lesdits moyens (14, 15, 16) de réglage du retard comprennent un moyen de commande (16) pour réduire le retard $\Delta$ dudit moyen (14) à retard lorsqu'un signal audio numérique post-enregistré est reproduit depuis une piste différente de la piste depuis laquelle un signal vidéo numérique associé est reproduit.

5. Appareil selon la revendication 4, dans lequel le signal audio numérique post-enregistré comprend un signal d'identification (ID) indiquant le mode de post-enregistrement ; ledit moyen (12a) de traitement audio numérique comprend un moyen pour détecter ledit signal ID ; et ledit moyen de commande (16) est sensible au signal détecté ID pour réduire le retard $\Delta$ dudit moyen (14) à retard

6. Appareil selon la revendication 1, dans lequel une image dudit signal vidéo numérique est enregistrée dans $n_1$ pistes, et le signal audio numérique associé à ladite image du signal vidéo numérique est enregistré dans $n_2$ pistes.

7. Appareil d'enregistrement/reproduction à bande vidéo numérique pour l'enregistrement et la reproduction de signaux vidéo numériques et audio numériques dans des parties séparées au moins d'une piste d'enregistrement, et pouvant fonctionner en mode de post-enregistrement pour enregistrer un signal vidéo numérique associé à un signal audio numérique enregistré antérieurement dans des pistes d'enregistrement différentes des pistes d'enregistrement sur lesquelles ledit signal audio numérique associé est enregistré, ledit appareil comprenant :

- un moyen (12v) de traitement vidéo numérique pour traiter un signal vidéo numérique reproduit depuis une piste d'enregistrement, ledit moyen (12v) de traitement vidéo numérique présentant un retard intrinsèque $t_2$ ;
- un moyen (12a) de traitement audio numérique pour traiter un signal audio numérique reproduit depuis une piste d'enregistrement, ledit moyen (12a) de traitement audio numérique présentant un retard intrinsèque $t_{21}$, où $t_{21} < t_2$ ;
- un moyen (14) à retard variable pour retarder le signal audio numérique reproduit d'un retard $\Delta$ sensiblement égal à $t_2 - t_{21}$, de sorte que lorsque des signaux vidéo numériques et audio numériques sont enregistrés en même temps, lesdits signaux vidéo numériques et audio numériques sont reproduits et récupérés en synchronisme ; et
- des moyens (14, 16) de réglage du retard pouvant fonctionner pendant la reproduction de signaux audio numériques lorsque lesdits signaux vidéo numériques ont été post-enregistrés pour augmenter le retard $\Delta$ dudit moyen (14) à retard variable, de sorte que le signal vidéo numérique post-enregistré et ledit signal audio numérique sont reproduits et récupérés sensiblement en synchronisme.

8. Appareil selon la revendication 7, dans lequel un signal vidéo numérique post-enregistré est fourni pour le post-enregistrement sensiblement immédiatement après la reproduction du signal audio numérique associé, et est enregistré après un retard $t_1$ ; et dans lequel lesdits moyens (14, 16) de réglage du retard peuvent fonctionner pour augmenter le retard dudit moyen (14) à retard variable (14), de façon telle que $\Delta = t_1 + (t_2 - t_{21}) + T$, où $T$ est le retard cumulé concernant l'envoi du signal vidéo numérique pour le post-enregistrement et concernant la reproduction du signal vidéo numérique post-enregistré.

9. Appareil selon la revendication 7, dans lequel le signal vidéo numérique post-enregistré comprend un signal d'identification (ID) indiquant le mode de post-enregistrement, ledit moyen (12v) de traitement vidéo numérique comprenant un moyen pour détecter ledit signal ID ; et lesdits moyens (14, 16) de réglage du retard comprennent des moyens sensibles au signal ID détecté pour augmenter le retard $\Delta$ dudit moyen (14) à retard variable.

10. Appareil selon la revendication 7, dans lequel une image dudit signal vidéo numérique est enregistrée dans $n_1$ pistes, et le signal audio numérique associé à cette image est enregistré dans $n_2$ pistes.

11. Appareil selon la revendication 10, dans lequel $n_1 = n_2$.

12. Appareil selon la revendication 6 ou 10, dans lequel $n_1 > n_2$.

13. Appareil selon la revendication 10, dans lequel lesdites pistes $n_1$ sont enregistrées au niveau d'une position retardée par rapport auxdites pistes $n_2$ lorsque le signal vidéo numérique est enregistré en mode de post-enregistrement.

F I G. 1A

F I G. 1B

F I G. 1C

FIG. 2A

FIG. 2B

FIG. 2C

1 FRAME
10 TRACKS

10 TRACKS

$x_2$ — $t_2$ — $x_3$

PLAYBACK | DECODE | OUTPUT

1 FRAME
(10 TRACKS)

$x_4$ — $t_{11}$ — $t_{12}$ — $x_5$ — $t_{21}$ — $t_{22}$ — $x_6$

INPUT | DELAY | RECORD/PLAYBACK | DELAY | OUTPUT

ENCODE

DECODE

10 TRACKS | 25 TRACKS | 25 TRACKS

60 TRACKS (0.2 SECOND)

EP 0 532 310 B1

FIG. 3

FIG. 4A

FIG. 4B

FIG. 4C

FIG. 4D

EP 0 532 310 B1

FIG. 5A

1 FRAME
10 TRACKS
2 TRACKS
2 TRACKS

FIG. 5B

b1    $t_1$ (15 TRACKS)    b2    $t_2$ (15 TRACKS)    b3

INPUT    ENCODE    RECORD/PLAYBACK    DECODE    OUTPUT

FIG. 5C

$t_{11}$ (1 TRACK)    $t_{21}$ (1 TRACK)
$C_1$   $t_{13}$ (22 TRACKS)   $C_2$   $t_{23}$ (22 TRACKS)   $C_3$

OUTPUT
DELAY    DELAY
ENCODE    DECODE
INPUT    RECORD/PLAYBACK

FIG. 5D

$t_{11}$ (1 TRACK)
$t_{21}$ (1 TRACK)
$C_4$ $C_5$ $C_6$
INPUT    RECORD/PLAYBACK
OUTPUT
ENCODE    DECODE

10 TRACKS    3 TRACKS

16 TRACKS
(0.05 SECOND)

FIG. 6A

FIG. 6B

FIG. 6C

FIG. 6D

FIG. 6E